# EUROPEAN PATENT APPLICATION

(11) **EP 3 923 374 A1**
(43) Date of publication of application: **15.12.2021**
(21) Application number: 20792051.3
(22) Date of filing: 27.03.2020
(51) Int. Cl.: H01M 4/02, H01M 4/13, H01M 4/36, H01M 4/86, H01M 10/0566

(54) **ELECTRODE STRUCTURE AND SECONDARY BATTERY**

(30) Priority: 19.04.2019 JP 2019079940
(71) Applicant: Murata Manufacturing Co., Ltd., Nagaokakyo-shi, Kyoto 617-8555 (JP)
(72) Inventor: INOUE Nobuhiro, Nagaokakyo-shi, Kyoto 617-8555 (JP)
(74) Representative: Witte, Weller & Partner Patentanwälte mbB
(86) International application number: PCT/JP2020/013990
(87) International publication number: WO 2020/213369

(57) **Abstract**

An electrode structure includes active material particles, and a covering film having an insulating property. The active material particles are connected to each other and form a porous structure having voids. The covering film has a thickness of less than or equal to 1 nanometer, and covers at least some of inner wall faces of the active material particles. The inner wall faces are located inside the voids.

## Description

### Technical Field

The technology relates to an electrode structure having a porous structure, and a secondary battery using the electrode structure.

### Background Art

An electrode structure that includes active material particles is used for electrodes in various kinds of devices, including secondary batteries. In the electrode structure, the active material particles are connected to each other, thereby forming a porous structure having voids.

A configuration of the electrode structure influences not only the performance of the electrode structure itself but also the performance of the devices using the electrode structure. Accordingly, various considerations have been given to the configuration of the electrode structure. Specifically, in order to implement a porous fuel cell, a conformal electrically conductive layer (thickness = 5 nm to 250 nm) of a material such as ruthenium is formed in fine pores of porous silicon (see, for example, PTL 1). Further, in order to establish a method of manufacturing a lithium ion battery, a passivation protector (thickness = 1 nm to 1 µm), which is a thin-film deposition layer of a material such as a metal oxide, is formed on a surface of an anode (see, for example, PTL 2).

### Citation List

### Patent Literature

PTL 1: Japanese Unexamined Patent Application Publication (Translation of PCT Application) No. 2005-530307
PTL 2: Japanese Unexamined Patent Application Publication No. 2013-143375 Summary

Various kinds of devices in which an electrode structure is to be used are increasingly gaining higher performance and more functions. Accordingly, there is still room for improvement in terms of an electrical characteristic of the electrode structure.

The technology has been made in view of such an issue and it is an object of the technology to provide an electrode structure and a secondary battery that are each able to achieve a superior electrical characteristic.

An electrode structure according to an embodiment of the technology includes active material particles, and a covering film having an insulating property. The active material particles are connected to each other and form a porous structure having voids. The covering film has a thickness of less than or equal to 1 nanometer, and covers at least some of inner wall faces of the active material particles. The inner wall faces are located inside the voids.

A secondary battery according to an embodiment of the technology includes an electrode and an electrolytic solution. The electrode includes an electrode structure. The electrode structure has a configuration similar to that of the electrode structure according to the embodiment of the technology described above.

According to the electrode structure of the embodiment of the technology, or the secondary battery of the embodiment of the technology, the active material particles are connected to each other to thereby form a porous structure having voids, and at least some of the inner wall faces, which are located inside the voids, of the active material particles are covered with the covering film having an insulating property and having a thickness of 1 nm or less. This makes it possible to achieve a superior electrical characteristic.

Note that effects of the technology are not necessarily limited to those described above and may include any of a series of effects described below in relation to the technology.

### Brief Description of Drawings

[FIG. 1] FIG. 1 is a schematic sectional view of a configuration of an electrode structure according to one embodiment of the technology.
[FIG. 2] FIG. 2 is an enlarged sectional view of a partial configuration of the electrode structure illustrated in FIG. 1.
[FIG. 3] FIG. 3 is a sectional diagram for describing a method of manufacturing the electrode structure.
[FIG. 4] FIG. 4 is a perspective view of a configuration of a secondary battery that is an example of applications of the electrode structure.
[FIG. 5] FIG. 5 is an enlarged sectional view of a configuration of a wound electrode body illustrated in FIG. 4.
[FIG. 6] FIG. 6 is a sectional view of a configuration of a secondary battery (a wound electrode body) according to Modification 5.
[FIG. 7] FIG. 7 is a sectional view of a configuration of a secondary battery (a wound electrode body) according to Modification 6.

### Modes for Carrying Out the Invention

Some embodiments of the technology are described below in detail with reference to the drawings. The description is given in the following order.
1. Electrode Structure
   1-1. Configuration
   1-2. Operation
   1-3. Manufacturing Method
   1-4. Action and Effects
2. Application of Electrode Structure (Secondary Battery)
   2-1. Configuration
   2-2. Operation
   2-3. Manufacturing Method
   2-4. Action and Effects
3. Modifications
4. Applications of Secondary Battery

### <1. Electrode Structure>

A description is given first of an electrode structure according to an embodiment of the technology.

The electrode structure is a structure for use with various kinds of devices that perform various kinds of functions through the use of electrochemical reactions. The electrode structure includes an active material in the form of particles (i.e., active material particles) contributing to the electrochemical reactions. Specific applications of the electrode structure, that is, the kinds of the devices in which the electrode structure is usable, will be described later.

Note that the electrode structure is used as an electrode in the various kinds of devices. The electrode for which the electrode structure is usable is not limited to a particular kind, and may be a positive electrode, a negative electrode, or both. The electrode structure may be used as the electrode itself, or as a part of the electrode.

### <1-1. Configuration>

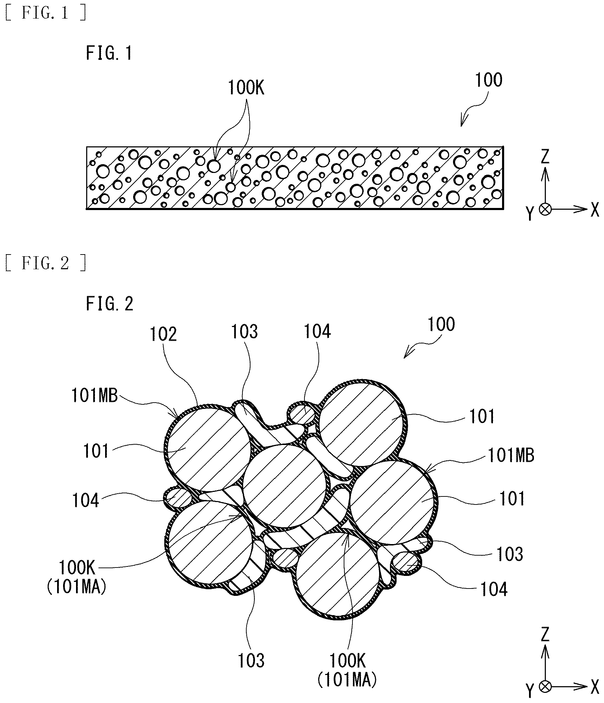

FIG. 1 schematically illustrates a sectional configuration of an electrode structure 100 as an example of the electrode structure. FIG. 2 illustrates an enlarged partial sectional configuration of the electrode structure 100 illustrated in FIG. 1.

As illustrated in FIG. 1, the electrode structure 100 has a porous structure with voids 100K. Note that the voids 100K each have a circular shape in FIG. 1 for the sake of simple illustration. However, the shape of each void 100K is not particularly limited, and therefore not limited to a circular shape.

More specifically, as illustrated in FIG. 2, the electrode structure 100 includes a covering film 102 together with active material particles 101, for example. Here, the electrode structure 100 further includes binder particles 103 and electrically conductive particles 104, for example.

### [Active Material Particles]

The active material particles 101 allow an electrode reactant to be inserted thereinto and extracted therefrom. Examples of the electrode reactant include lithium, sodium, potassium, aluminum, and other light metals.

The active material particles 101 are connected to each other to thereby form the porous structure having the voids 100K. Note that the active material particles 101 may be directly connected to each other without the binder particles 103 therebetween, or may be indirectly connected to each other via the binder particles 103.

The voids 100K are empty spaces present in the electrode structure 100, more specifically, spaces surrounded by the active material particles 101. Thus, the active material particles 101 have inner wall faces 101MA located inside the voids 100K, and outer wall faces 101MB located outside the voids 100K.

Note that in a case where the electrode structure 100 includes the binder particles 103 and the electrically conductive particles 104 together with the active material particles 101, the foregoing voids 100K may be spaces surrounded by the binder particles 103 or by the electrically conductive particles 104. Needless to say, the voids 100K may be spaces surrounded by any two or more kinds of particles among the active material particles 101, the binder particles 103, and the electrically conducive particles 104.

An average diameter of the voids 100K is not particularly limited. Specifically, the average diameter of the voids 100K, i.e., a fine pore diameter, measured by a mercury intrusion method (by means of a mercury porosimeter) is, for example, from 0.1 µm to 20 µm both inclusive, and preferably from 0.5 µm to 10 µm both inclusive. A reason for this is that such a diameter range makes it easier to form the ultra-thin covering film 102, which will be described later, effectively and stably. The fine pore diameter is a pore diameter (µm) corresponding to a vertex of a peak (a curve opening downward) detected in a result of the measurement, performed by means of the mercury porosimeter, in which a horizontal axis represents a pore diameter (µm) and a vertical axis represents a volume fraction (%) of an amount of intruded mercury. Note that a value of the amount of the intruded mercury is assumed to be measured, for example, under conditions that: a surface tension of the mercury is 485 mN/m; a contact angle of the mercury is 130°; and a relationship between the pore diameter of the fine pores and pressure is approximated to a relationship in which 180/pressure equals the pore diameter.

The active material particles 101 include, for example, one or more of various kinds of materials depending on the application of the electrode structure 100. Details of the material(s) for forming the active material particles 101 will be described later.

### [Covering Film]

The covering film 102 has an insulating property, and covers some or all of the inner wall faces 101MA, which are located inside the voids 100K, of the active material particles 101. FIG. 2 illustrates a case where the covering film 102 covers all of the inner wall faces 101MA, for example. As a result, inside each of the voids 100K present in the electrode structure 100, the inner wall faces 101MA are sufficiently covered with the covering film 102.

Note that the covering film 102 also covers, for example, some or all of the outer wall faces 101MB, which are located outside the voids 100K, of the active material particles 101. FIG. 2 illustrates a case where the covering film 102 covers all of the outer wall faces 101MB, for example. As a result, outside each of the voids 100K present in the electrode structure 100, the outer wall faces 101MB are also sufficiently covered with the covering film 102.

Here, for example, the electrode structure 100 includes the binder particles 103 together with the active material particles 101, and therefore the covering film 102 also covers some or all of respective surfaces of the binder particles 103. FIG. 2 illustrates a case where the covering film 102 covers all of the respective surfaces of the binder particles 103, for example.

Further, for example, the electrode structure 100 includes the electrically conductive particles 104 together with the active material particles 101, and therefore the covering film 102 also covers some or all of respective surfaces of the electrically conductive particles 104. FIG. 2 illustrates a case where the covering film 102 covers all of the respective surfaces of the electrically conductive particles 104, for example.

Note that the covering film 102 has a thickness of 1 nm or less. A reason for this is that such a thickness allows the inner wall faces 101MA inside each of the voids 100K to be covered with the ultra-thin, insulating covering film 102. This improves ion diffusibility inside the electrode structure 100, thus reducing ion diffusion resistance of the electrode structure 100. Such an advantage also results similarly from, for example, the outer wall faces 101MB being covered with the ultra-thin, insulating covering film 102.

In addition, for example, in a case where the electrode structure 100 is used together with an electrolytic solution in various kinds of applications, a surface (the inner wall face 101MA and the outer wall face 101MB) of each of the active material particles 101 is protected by the covering film 102 physically and chemically. This suppresses a decomposition reaction of the electrolytic solution resulting from reactivity of each of the active material particles 101, while securing ion diffusibility between the active material particles 101.

The thickness of the covering film 102 described here is a so-called average thickness. An example procedure for measuring the thickness of the covering film 102 is as described below.

First, a section of the electrode structure 100 is observed by means of an electron microscope. Any one or more kinds of electron microscopes including, without limitation, a scanning electron microscope (SEM) and a transmission electron microscope (TEM), are used as the electron microscope. Specific examples of the electron microscope include a field emission scanning electron microscope JEM-2200FS manufactured by JEOL Ltd. with an energy-dispersive X-ray analyzer (NORAN System 7). Although not particularly limited, a magnification for the observation is, for example, 2,000,000 times. Thereafter, on the basis of the observation result (an electron micrograph) of the section of the electrode structure 100, thicknesses of the covering film 102 are measured at ten different points to thereby obtain ten thicknesses. Lastly, an average value of the ten thicknesses is calculated to obtain the average thickness (the thickness of the covering film 102).

In the electrode structure 100, the inner wall faces 101MA are covered with the covering film 102, and what is more, the covering film 102 is ultra-thin, i.e., 1 nm or less in thickness. A reason for this is that the covering film 102 is formed by a special film-formation method that achieves a high covering characteristic (a high penetrative characteristic). Examples of such a special film-formation method include one or more methods including, without limitation, atomic layer deposition (ALD) and plasma-enhanced atomic layer deposition (PEALD). In a case of using such a special film-formation method, it becomes easier for a film-formation source (a material for forming the covering film 102) to reach far into the voids 100K each having a high aspect ratio, as compared with a case of using physical vapor deposition (PVD), chemical vapor deposition (CVD), or the like. This allows the inner wall faces 101MA to be covered with the covering film 102 easily, independently of the aspect ratio of the voids 100K, and makes the covering film 102 markedly small in thickness. In this case, in addition to the covering film 102 becoming ultra-thin, it becomes easier for the ultra-thin covering film 102 to be uniform in thickness, in particular.

An upper limit value of the thickness of the covering film 102 is 1 nm, as described above. A lower limit value of the thickness of the covering film 102 is not particularly limited; however, the thickness of the covering film 102 is preferably 0. 1 nm or more, in particular. A reason for this is that in such a case, the status of formation of the covering film 102 by means of a method such as ALD is stabilized, and it thus becomes easier to control the thickness of the covering film 102. This makes it easier to form the covering film 102 into a desired thickness, and makes it easier for the covering film 102 to be unform in thickness.

The covering film 102 includes any one or more of insulating materials, examples of which include a metal oxide. The metal oxide is not limited to a particular kind, and examples thereof include titanium oxide (e.g., TiO₂), tin oxide (e.g., SnO₂), silicon oxide (e.g., SiO₂), and aluminum oxide (e.g., Al₂O₃). Note that the respective compositions of titanium oxide, tin oxide, silicon oxide, and aluminum oxide are not limited to the above-listed ones (TiO₂, SnO₂, SiO₂, and Al₂O₃), and are freely changeable.

In particular, titanium oxide, tin oxide, and silicon oxide are preferable, and titanium oxide and tin oxide are more preferable. A reason for this is that sufficiently high ion diffusibility is achievable inside the electrode structure 100.

### [Binder Particles]

The binder particles 103 bind the active material particles 101 to each other. Note that in a case where the electrode structure 100 includes the electrically conductive particles 104, for example, the binder particles 103 may bind the active material particles 101 and the electrically conductive particles 104 to each other, or may bind the electrically conductive particles 104 to each other.

The binder particles 103 each include, for example, one or more of materials including, without limitation, a synthetic rubber and a polymer compound. Examples of the synthetic rubber include a styrene-butadiene-based rubber. Examples of the polymer compound include polyvinylidene difluoride and polyimide.

### [Electrically Conductive Particles]

The electrically conductive particles 104 enhance electrical conductivity of the electrode structure 100. The electrically conductive particles 104 each include, for example, one or more of electrically conductive materials including, without limitation, a carbon material. Examples of the carbon material include graphite, carbon black, acetylene black, and Ketjen black. Note that the electrically conductive material may include a material such as a metal material or an electrically conductive polymer.

### <1-2. Operation>

In the electrode structure 100, an electrode reactant is to be inserted into and extracted from each of the active material particles 101 that form the porous structure having the voids 100K. Specifically, for example, in a case where the electrode reactant is lithium, lithium ions are to be inserted into and extracted from each of the active material particles 101.

### <1-3. Manufacturing Method>

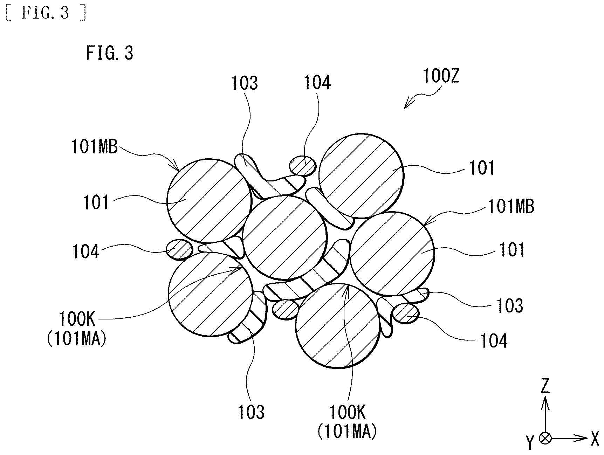

In order to describe a method of manufacturing the electrode structure 100, FIG. 3 illustrates a sectional configuration corresponding to FIG. 2. FIG. 3 illustrates a sectional configuration of a precursor 100Z to be used for manufacturing the electrode structure 100.

In a case of manufacturing the electrode structure 100, first, the active material particles 101, the binder particles 103, and the electrically conductive particles 104 are mixed together to obtain a mixture. The mixture ratio may be freely chosen. Thereafter, the mixture is put into a solvent such as an organic solvent to thereby prepare a paste mixture slurry.

Thereafter, the mixture slurry is applied on one side of a base. The base is a support body to be used for manufacturing the electrode structure 100. Examples of the base include any film and any metal plate. The active material particles 101 and the electrically conductive particles 104 are thereby bound to each other via the binder particles 103. As a result, the precursor 100Z is formed, as illustrated in FIG. 3. The precursor 100Z has a configuration similar to that of the electrode structure 100 except that the covering film 102 is not yet formed. In other words, in the precursor 100Z, the porous structure having the voids 100K is formed by the active material particles 101, the binder particles 103, and the electrically conductive particles 104.

Lastly, using a method such as ALD described above, the covering film 102 is formed to cover the inner wall faces 101MA inside the voids 100K. Details of a process of forming the covering film 102 are as described below, for example.

In the process of forming the covering film 102, for example, with the precursor 100Z put inside a chamber, a precursor material in a gaseous (vapor) state and an oxygen gas (O₂) are introduced in this order into the chamber, following which plasma is generated inside the chamber. In this case, the foregoing series of steps up to the generation of plasma may be repeated a plurality of times. The thickness of the covering film 102 is controllable by changing the number of times the foregoing series of steps is repeated. Conditions including, without limitation, the temperature and the pressure inside the chamber are freely chosen.

The precursor material mentioned above is a material to be the film-formation source, i.e., a raw material, of the covering film 102. An appropriate kind of precursor material is selected in accordance with the material for forming the covering film 102, for example. Specifically, in a case where the material for forming the covering film 102 is titanium oxide, examples of the precursor material to be used include tetrakis dimethylamido titanium. In a case where the material for forming the covering film 102 is tin oxide, examples of the precursor material to be used include tetrakis dimethylamido tin. In a case where the material for forming the covering film 102 is silicon oxide, examples of the precursor material to be used include trimethylsilyldimethylamine. In a case where the material for forming the covering film 102 is aluminum oxide, examples of the precursor material to be used include trimethylaluminum.

Note that after the electrode structure 100 is manufactured, the electrode structure 100 may be compression-molded by means of a machine such as a roll pressing machine. In this case, the electrode structure 100 may be heated. The electrode structure 100 may be compression-molded a plurality of times. In addition, after the electrode structure 100 is manufactured, the electrode structure 100 may be separated from the base.

As a result, the electrode structure 100 including the active material particles 100, the covering film 102, the binder particles 103, and the electrically conductive particles 104 is completed.

### <1-4. Action and Effects>

According to the electrode structure 100, the active material particles 101 are connected to each other to thereby form the porous structure having the voids 100K. Further, the covering film 102 having an insulating property and having a thickness of 1 nm or less covers some or all of the inner wall faces 101MA, which are located inside the voids 100K, of the active material particles 101. In this case, as described above, ion diffusibility improves inside the electrode structure 100, and therefore the ion diffusion resistance of the electrode structure 100 decreases. Accordingly, it is possible to achieve a superior electrical characteristic.

The superior electrical characteristic is thus achievable also in various kinds of devices that use the electrode structure 100. In particular, in a case where the electrode structure 100 is used together with an electrolytic solution in various kinds of applications, a decomposition reaction of the electrolytic solution resulting from reactivity of the active material particles 101 is suppressed while ion diffusibility between the active material particles 101 is secured. Accordingly, it is possible to achieve a further superior electrical characteristic.

The thickness of the covering film 102 may be 0.1 nm or more, in particular. This makes it easier to control the thickness of the covering film 102, thus making it possible to achieve higher effects.

Further, the covering film 102 may include a metal oxide, and the metal oxide may include, for example, titanium oxide. This sufficiently improves ion diffusibility inside the electrode structure 100, thus making it possible to achieve higher effects.

Further, the covering film 102 may also cover some or all of the outer wall faces 101MB, which are located outside the voids 100K, of the active material particles 101. This further reduces the ion diffusion resistance of the electrode structure 100, thus making it possible to achieve higher effects. In particular, in a case where the electrode structure 100 is used together with an electrolytic solution in various kinds of applications, a decomposition reaction of the electrolytic solution resulting from reactivity of each of the active material particles 101 is further suppressed. Accordingly, it is possible to achieve even higher effects.

Further, the electrode structure 100 may include the binder particles 103, and the covering film 102 may also cover some or all of the respective surfaces of the binder particles 103. In such a case, the surfaces of the binder particles 103 are also protected by the covering film 102. Accordingly, it is possible to achieve higher effects.

Further, the electrode structure 100 may include the electrically conductive particles 104, and the covering film 102 may also cover some or all of the respective surfaces of the electrically conductive particles 104. In such a case, the surfaces of the electrically conductive particles 104 are also protected by the covering film 102. Accordingly, it is possible to achieve higher effects.

### <2. Application of Electrode Structure (Secondary Battery)>

Next, a description is given of applications of the electrode structure described above. As an example of the applications of the electrode structure, a secondary battery that uses the electrode structure as a part of an electrode is described below, for example.

The secondary battery described here obtains a battery capacity by utilizing insertion and extraction of an electrode reactant, and includes a positive electrode, a negative electrode, and an electrolytic solution. More specifically, the secondary battery is, for example, a lithium-ion secondary battery that obtains a battery capacity by utilizing insertion and extraction of lithium. In the secondary battery, an electrochemical capacity per unit area of the negative electrode is greater than an electrochemical capacity per unit area of the positive electrode in order to prevent precipitation of lithium metal on a surface of the negative electrode in the middle of charging, for example.

### <2-1. Configuration>

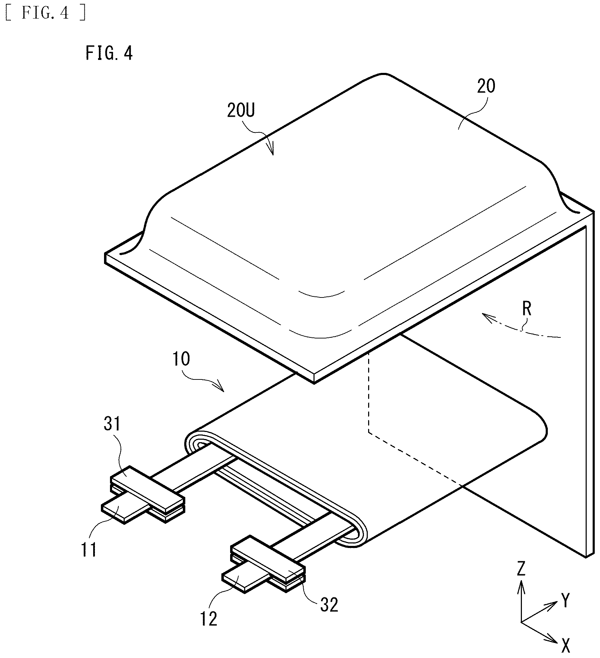

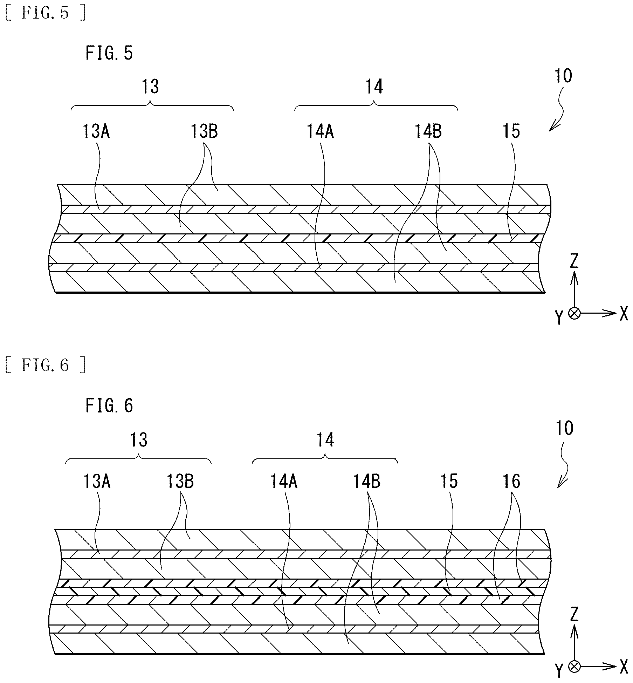

FIG. 4 is a perspective view of a configuration of the secondary battery. FIG. 5 illustrates an enlarged sectional configuration of a wound electrode body 10 illustrated in FIG. 4. Note that FIG. 4 illustrates a state in which the wound electrode body 10 and an outer package member 20 are separated away from each other, and FIG. 5 illustrates only a portion of the wound electrode body 10.

In the secondary battery, as illustrated in FIG. 4, for example, a battery device, i.e., the wound electrode body 10, is contained in the outer package member 20. The outer package member 20 is film-shaped and has softness or flexibility. A positive electrode lead 11 and a negative electrode lead 12 are coupled to the wound electrode body 10. FIG. 4 thus illustrates a secondary battery of a laminated-film type.

### [Outer Package Member]

Referring to FIG. 4, for example, the outer package member 20 is a single film that is foldable in a direction of an arrow R. The outer package member 20 has a depression 20U adapted to receive the wound electrode body 10. The outer package member 20 may be, for example, a polymer film, a metal foil, or a laminated film including a polymer film and a metal foil stacked on each other. In particular, the outer package member 20 is preferably a laminated film. A reason for this is that a sufficient sealing property and sufficient durability are obtainable.

Specifically, the outer package member 20 is, for example, a laminated film including a fusion-bonding layer, a metal layer, and a surface protective layer that are stacked in this order from an inner side. In the outer package member 20, for example, outer edges of the fusion-bonding layer are fusion-bonded to each other. Examples of the fusion-bonding layer include a polypropylene film. Examples of the metal layer include an aluminum foil. Examples of the surface protective layer include a nylon film.

Note that the outer package member 20 may include two laminated films, for example. In such a case, for example, the respective outer edges of the fusion-bonding layers may be fusion-bonded to each other, or the two laminated films may be adhered to each other by means of an adhesive.

A sealing film 31 is interposed between the outer package member 20 and the positive electrode lead 11, for example, and a sealing film 32 is interposed between the outer package member 20 and the negative electrode lead 12, for example. Examples of each of the sealing films 31 and 32 include a polypropylene film.

### [Wound Electrode Body]

As illustrated in FIGs. 4 and 5, for example, the wound electrode body 10 includes a positive electrode 13, a negative electrode 14, a separator 15, and an electrolytic solution. The electrolytic solution is a liquid electrolyte. In the wound electrode body 10, for example, the positive electrode 13 and the negative electrode 14 are stacked on each other with the separator 15 interposed therebetween, and the positive electrode 13, the negative electrode 14, and the separator 15 are wound. The positive electrode 13, the negative electrode 14, and the separator 15 are each impregnated with the electrolytic solution. Note that a surface of the wound electrode body 10 may be protected by means of a protective tape (not illustrated).

In the secondary battery, as described later, the foregoing electrode structure (the electrode structure 100) is used as a part of the positive electrode 13, i.e., a positive electrode active material layer 13B, for example.

### (Positive Electrode)

As illustrated in FIG. 5, for example, the positive electrode 13 includes a positive electrode current collector 13A, and the positive electrode active material layer 13B provided on each of both sides of the positive electrode current collector 13A. Note that the positive electrode active material layer 13B may be provided only on one side of the positive electrode current collector 13A.

The positive electrode current collector 13A includes, for example, an electrically conductive material such as aluminum. The positive electrode active material layer 13B has a configuration similar to that of the electrode structure 100, for example. That is, the positive electrode active material layer 13B includes, as positive electrode active material particles, one or more of positive electrode materials into which lithium is insertable and from which lithium is extractable. The positive electrode active material layer 13B may further include positive electrode binder particles and positive electrode conductive particles. Details of the positive electrode active material particles are similar to the details of the active material particles described above, except for matters newly described here. Details of the positive electrode binder particles and the positive electrode conductive particles are similar to the details of the binder particles and the electrically conductive particles described above.

The positive electrode material includes, for example, a lithium-containing compound. The lithium-containing compound is not limited to a particular kind, and examples thereof include a lithium composite oxide and a lithium phosphoric acid compound. The lithium composite oxide is an oxide that includes lithium and one or more transition metal elements. The lithium phosphoric acid compound is a phosphoric acid compound that includes lithium and one or more transition metal elements. The transition metal element is not limited to a particular kind, and examples thereof include nickel (Ni), cobalt (Co), manganese (Mn), and iron (Fe).

Specifically, examples of a lithium composite oxide of a layered rock-salt type include LiNiO₂, LiCoO₂, LiCo_{0.98}Al_{0.01}Mg_{0.01}O₂, LiNi_{0.5}Co_{0.2}Mn_{0.3}O₂, LiNi_{0.8}Co_{o.15}Al_{0.05}O₂, LiNi_{0.33}Co_{0.33}Mn_{0.33}O₂, Li_{1.2}Mn_{0.52}Co_{0.175}Ni_{0.1}O₂, and Li_{1.15}(Mn_{0.65}Ni_{0.22}Co_{0.13})O₂. Examples of a lithium composite oxide of a spinel type include LiMn₂O₄. Examples of a lithium phosphoric acid compound of an olivine type include LiFePO₄, LiMnPO₄, LiMn_{0.5}Fe_{0.5}PO₄, LiMn_{0.7}Fe_{0.3}PO₄, and LiMn_{0.75}Fe_{0.25}PO₄.

### (Negative Electrode)

As illustrated in FIG. 5, the negative electrode 14 includes, for example, a negative electrode current collector 14A, and a negative electrode active material layer 14B provided on each of both sides of the negative electrode current collector 14A. Note that the negative electrode active material layer 14B may be provided only on one side of the negative electrode current collector 14A.

The negative electrode current collector 14A includes, for example, an electrically conductive material such as copper. The negative electrode active material layer 14B includes, as a negative electrode active material or negative electrode active materials, one or more of negative electrode materials into which lithium is insertable and from which lithium is extractable. The negative electrode active material layer 14B may further include another material, examples of which include a negative electrode binder and a negative electrode conductor.

The negative electrode material includes, for example, one or more of materials including, without limitation, a carbon material and a metal-based material. That is, the negative electrode material may include both of the carbon material and the metal-based material, for example.

Specifically, examples of the carbon material include graphitizable carbon, non-graphitizable carbon, and graphite. The carbon material may be low-crystalline carbon or amorphous carbon, for example. Examples of a shape of the carbon material include a fibrous shape, a spherical shape, a particulate shape, and a scale-like shape. The metal-based material is a material including one or more elements among metal elements and metalloid elements that are each able to form an alloy with lithium. The metal-based material may be, for example, a simple substance, an alloy, a compound such as an oxide, or a mixture of two or more thereof, or a material including one or more phases thereof. Note that the metal-based material may include one or more non-metallic elements. Specifically, examples of the metal elements and the metalloid elements include magnesium, boron, aluminum, gallium, indium, silicon, germanium, tin, lead, bismuth, cadmium, silver, zinc, hafnium, zirconium, yttrium, palladium, and platinum.

Details of the negative electrode binder are similar to the details of the binder particles described above, for example. Details of the negative electrode conductor are similar to the details of the electrically conductive particles described above, for example.

### (Separator)

The separator 15 is interposed between the positive electrode 13 and the negative electrode 14. The separator 15 includes, for example, a porous film including one or more of materials including, without limitation, a synthetic resin and ceramic. The separator 15 may be a stacked film including two or more porous films stacked on each other. Examples of the synthetic resin include polyethylene.

### (Electrolytic Solution)

The electrolytic solution includes a solvent and an electrolyte salt. Note that the electrolytic solution may include only a single kind of solvent or two or more kinds of solvents. Similarly, the electrolytic solution may include only a single kind of electrolyte salt or two or more kinds of electrolyte salts.

The solvent includes, for example, a non-aqueous solvent (an organic solvent). The electrolytic solution including the non-aqueous solvent is a so-called non-aqueous electrolytic solution. Specifically, examples of the non-aqueous solvent include a cyclic carbonic acid ester, a chain carbonic acid ester, a lactone, a chain carboxylic acid ester, and a mononitrile compound. Examples of the cyclic carbonic acid ester include ethylene carbonate and propylene carbonate. Examples of the chain carbonic acid ester include dimethyl carbonate, diethyl carbonate, and methyl ethyl carbonate. Examples of the lactone include γ-butyrolactone and γ-valerolactone. Examples of the chain carboxylic acid ester include methyl acetate, ethyl acetate, methyl propionate, ethyl propionate, and propyl propionate. Examples of the mononitrile compound include acetonitrile, methoxy acetonitrile, and 3-methoxy propionitrile.

Further examples of the non-aqueous solvent include an unsaturated cyclic carbonic acid ester, a halogenated carbonic acid ester, a sulfonic acid ester, an acid anhydride, a dinitrile compound, a diisocyanate compound, and a phosphoric acid ester. Examples of the unsaturated cyclic carbonic acid ester include vinylene carbonate, vinyl ethylene carbonate, and methylene ethylene carbonate. Examples of the halogenated carbonic acid ester include 4-fluoro-1,3-dioxolane-2-one, 4,5-difluoro-1,3-dioxolane-2-one, and fluoromethyl methyl carbonate. Examples of the sulfonic acid ester include 1,3-propane sultone and 1,3-propene sultone. Examples of the acid anhydride include succinic anhydride, glutaric anhydride, maleic anhydride, ethane disulfonic anhydride, propane disulfonic anhydride, sulfobenzoic anhydride, sulfopropionic anhydride, and sulfobutyric anhydride. Examples of the dinitrile compound include succinonitrile, glutaronitrile, adiponitrile, and phthalonitrile. Examples of the diisocyanate compound include hexamethylene diisocyanate. Examples of the phosphoric acid ester include trimethyl phosphate and triethyl phosphate.

### (Electrolyte Salt)

The electrolyte salt includes, for example, a light metal salt such as a lithium salt. Specifically, examples of the lithium salt include lithium hexafluorophosphate, lithium tetrafluoroborate, lithium hexafluoroarsenate, lithium perchlorate, lithium trifluoromethanesulfonate, lithium bis(fluorosulfonyl)imide, lithium bis(trifluoromethane sulfonyl)imide, lithium bis(pentafluoroethane sulfonyl)imide, lithium tris(trifluoromethane sulfonyl)methyl, lithium chloride, lithium bromide, lithium fluorophosphate, lithium difluorophosphate, and lithium bis(oxalato)borate. The content of the electrolyte salt is, for example, from 0.3 mol/kg to 3.0 mol/kg both inclusive with respect to the solvent, but is not particularly limited thereto.

### [Positive Electrode Lead and Negative Electrode Lead]

The positive electrode lead 11 is coupled to the positive electrode 13 (the positive electrode current collector 13A), and is led out from inside to outside of the outer package member 20. The positive electrode lead 11 includes, for example, an electrically conductive material such as aluminum, and has a shape such as a thin plate shape or a meshed shape.

The negative electrode lead 12 is coupled to the negative electrode 14 (the negative electrode current collector 14A), and is led out from inside to outside of the outer package member 20. The direction in which the negative electrode lead 12 is led out is similar to that in which the positive electrode lead 11 is led out, for example. The negative electrode lead 12 includes, for example, an electrically conductive material such as nickel, and has a shape similar to that of the positive electrode lead 11.

### <2-2. Operation>

Upon charging the secondary battery, for example, lithium ions are extracted from the positive electrode 13 and the extracted lithium ions are inserted into the negative electrode 14 via the electrolytic solution. Further, upon discharging the secondary battery, for example, lithium ions are extracted from the negative electrode 14, and the extracted lithium ions are inserted into the positive electrode 13 via the electrolytic solution.

### <2-3. Manufacturing Method>

In a case of manufacturing the secondary battery, for example, the positive electrode 13 and the negative electrode 14 are each fabricated and thereafter the secondary battery is assembled using the positive electrode 13, the negative electrode 14, and the electrolytic solution, as described below.

### [Fabrication of Positive Electrode]

Using the positive electrode current collector 13A as the base, the positive electrode active material layers 13B are formed on both sides of the positive electrode current collector 13A by a procedure similar to the fabrication procedure for the electrode structure 100 described above.

### [Fabrication of Negative Electrode]

First, the negative electrode active material, the negative electrode binder, and the negative electrode conductor are mixed together to obtain a negative electrode mixture. Thereafter, the negative electrode mixture is put into a solvent such as an organic solvent to thereby prepare a paste negative electrode mixture slurry. Lastly, the negative electrode mixture slurry is applied on both sides of the negative electrode current collector 14Ato thereby form the negative electrode active material layers 14B. Thereafter, the negative electrode active material layers 14B may be compression-molded by means of a machine such as a roll pressing machine. In this case, the negative electrode active material layers 14B may be heated. The negative electrode active material layers 14B may be compression-molded a plurality of times.

### [Assembly of Secondary Battery]

First, the positive electrode lead 11 is coupled to the positive electrode 13 (the positive electrode current collector 13A) by a method such as a welding method, and the negative electrode lead 12 is coupled to the negative electrode 14 (the negative electrode current collector 14A) by a method such as a welding method. Thereafter, the positive electrode 13 and the negative electrode 14 are stacked on each other with the separator 15 interposed therebetween, following which the positive electrode 13, the negative electrode 14, and the separator 15 are wound to thereby form a wound body.

Thereafter, the outer package member 20 is folded in such a manner as to sandwich the wound body, following which the outer edges on two sides of the outer package member 20 are bonded to each other by a method such as a thermal fusion bonding method to thereby allow the wound body to be contained in the pouch-shaped outer package member 20. Lastly, the electrolytic solution including the solvent and the electrolyte salt added thereto is injected into the pouch-shaped outer package member 20, following which the outer edges on the remaining one side of the outer package member 20 are bonded to each other by a method such as a thermal fusion bonding method to thereby seal the outer package member 20. In this case, the sealing film 31 is interposed between the outer package member 20 and the positive electrode lead 11, and the sealing film 32 is interposed between the outer package member 20 and the negative electrode lead 12. The wound body is thereby impregnated with the electrolytic solution. As a result, the wound electrode body 10 is formed. The wound electrode body 10 is thus contained in the outer package member 20. As a result, the secondary battery is completed.

### <2-4. Action and Effects>

The secondary battery includes the positive electrode 13, the negative electrode 14, and the electrolytic solution. The positive electrode 13 has a configuration similar to that of the electrode structure 100 described above. In this case, a decomposition reaction of the electrolytic solution is suppressed while the ion diffusion resistance of the positive electrode 13 decreases. Accordingly, it is possible for the positive electrode 13 to achieve a superior electrical characteristic. As a result, it is also possible for the secondary battery to achieve a superior electrical characteristic, i.e., a superior battery characteristic.

Action and effects other than the above related to the secondary battery are similar to those related to the electrode structure 100.

### <3. Modifications>

The respective configurations of the electrode structure 100 and the secondary battery described above are appropriately modifiable, as described below. Note that any two or more of the following series of modifications may be combined.

### [Modification 1]

In FIG. 2, the covering film 102 covers the inner wall faces 101MA of all of the active material particles 101, and covers the whole of each of the inner wall faces 101MA.

However, the covering film 102 may cover the inner wall faces 101MA of only some of the active material particles 101, and may cover only a portion of each of the inner wall faces 101MA. In such cases also, it is possible to achieve similar effects, in contrast to a case where the electrode structure 100 includes no covering film 102, or where the thickness of the covering film 102 is greater than 1 nm even if the electrode structure 100 includes the covering film 102.

The description given above concerning the inner wall faces 101MA also applies to the outer wall faces 101MB. That is, the covering film 102 need not necessarily cover the outer wall faces 101MB of all of the active material particles 101 and cover the whole of each of the outer wall faces 101MB. The covering film 102 may cover the outer wall faces 101MB of only some of the active material particles 101, and may cover only a portion of each of the outer wall faces 101MB.

### [Modification 2]

In FIG. 2, the electrode structure 100 includes the binder particles 103 and the electrically conductive particles 104 together with the active material particles 101.

However, the electrode structure 100 may include only the binder particles 103 together with the active material particles 101, or may include only the electrically conductive particles 104 together with the active material particles 101. In such cases also, ion diffusibility improves owing to the presence of the covering film 102. Accordingly, it is possible to achieve similar effects.

### [Modification 3]

ALD and PEALD have been described as examples of the method of forming the covering film 102 having a thickness of 1 nm or less. However, the method of forming the covering film 102 is not particularly limited and may be any method as long as a thickness of 1 nm or less is achievable thereby. Therefore, a method other than ALD and PEALD may be used. Even in a case where such another method is used, the ultra-thin covering film 102 is formable and it is thus possible to achieve similar effects.

### [Modification 4]

In FIG. 5, the positive electrode 13 has a configuration similar to that of the electrode structure 100. Instead of the positive electrode 13, however, the negative electrode 14 may have a configuration similar to that of the electrode structure 100. In such a case, the negative electrode active material layer 14B of the negative electrode 14 includes, as negative electrode active material particles, one or more of the negative electrode materials into which lithium is insertable and from which lithium is extractable. Examples of the negative electrode material include the carbon material and the metal-based material described above. Note that the negative electrode active material layer 14B may further include materials including, without limitation, negative electrode binder particles and negative electrode conductive particles. Details of the negative electrode active material particles, the negative electrode binder particles, and the negative electrode conductive particles are similar to the details of the active material particles, the binder particles, and the electrically conductive particles described above.

Alternatively, both of the positive electrode 13 and the negative electrode 14 may have a configuration similar to the configuration of the electrode structure 100. Details of the configuration of the positive electrode 13 similar to the configuration of the electrode structure 100 are as described above. Details of the configuration of the negative electrode 14 similar to the configuration of the electrode structure 100 are as described above.

In such a case also, ion diffusibility improves owing to the presence of the covering film 102. Accordingly, it is possible to achieve similar effects.

### [Modification 5]

FIG. 6 illustrates a sectional configuration of a secondary battery (wound electrode body 10) of Modification 5, and corresponds to FIG. 5. An electrolytic solution, which is a liquid electrolyte, is used in FIG. 5; however, as illustrated in FIG. 6, an electrolyte layer 16 may be used instead of the electrolytic solution. The electrolyte layer 16 is a gel electrolyte.

In the wound electrode body 10 using the electrolyte layer 16, for example, the positive electrode 13 and the negative electrode 14 are stacked on each other with the separator 15 and the electrolyte layer 16 interposed therebetween, and the positive electrode 13, the negative electrode 14, the separator 15, and the electrolyte layer 16 are wound. The electrolyte layer 16 is interposed, for example, between the positive electrode 13 and the separator 15, and between the negative electrode 14 and the separator 15.

Specifically, the electrolyte layer 16 includes an electrolytic solution and a polymer compound. In the electrolyte layer 16, the electrolytic solution is held by the polymer compound. The electrolytic solution has the configuration as described above. The polymer compound may be, for example, a homopolymer such as polyvinylidene difluoride, or a copolymer such as a copolymer of vinylidene fluoride and hexafluoropylene, or may include both the homopolymer and the copolymer. In a case of forming the electrolyte layer 16, for example, a precursor solution including, without limitation, the electrolytic solution, the polymer compound, and an organic solvent is prepared and thereafter, the precursor solution is applied on each of the positive electrode 13 and the negative electrode 14.

In this case also, lithium ions are movable between the positive electrode 13 and the negative electrode 14 via the electrolyte layer 16. Accordingly, it is possible to achieve similar effects.

### [Modification 6]

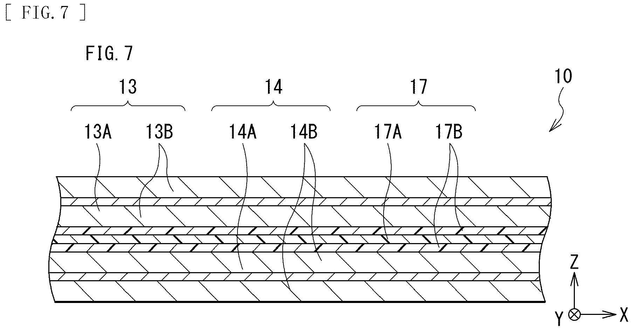

FIG. 7 illustrates a sectional configuration of a secondary battery (wound electrode body 10) of Modification 6, and corresponds to FIG. 5. While the separator 15, which is a porous film, is used in FIG. 5, a separator 17 may be used instead of the separator 15, as illustrated in FIG. 7, for example.

Specifically, the separator 17 includes, for example, a base layer 17A, and a polymer compound layer 17B provided on each of both sides of the base layer 17A. Note that the polymer compound layer 17B may be provided, for example, only on one side of the base layer 17A.

The base layer 17A has, for example, a configuration similar to that of the separator 15 described above. That is, the base layer 17A includes a porous film, for example. The polymer compound layer 17B includes, for example, a polymer compound such as polyvinylidene difluoride. A reason for this is that such a polymer compound is superior in physical strength and is electrochemically stable.

Note that the polymer compound layer 17B may include inorganic particles, for example. A reason for this is that, upon heat generation in the secondary battery, the inorganic particles release the heat, thus contributing to improved safety of the secondary battery. The inorganic particles are not limited to a particular kind, and examples thereof include insulating particles of a material such as aluminum oxide or aluminum nitride.

In a case of fabricating the separator 17, for example, a precursor solution including, without limitation, the polymer compound and an organic solvent is prepared and thereafter, the precursor solution is applied on both sides of the base layer 17Ato thereby form the polymer compound layers 17B.

In this case also, the positive electrode 13 and the negative electrode 14 are separated from each other with the separator 17 interposed therebetween. Accordingly, it is possible to achieve similar effects.

### <4. Applications of Secondary Battery>

Applications of the secondary battery are not particularly limited as long as they are, for example, machines, apparatuses, instruments, devices, or systems (assemblies of a plurality of apparatuses, for example) in which the secondary battery is usable as a driving power source, an electric power storage source for electric power accumulation, or any other source. The secondary battery used as a power source may serve as a main power source or an auxiliary power source. The main power source is preferentially used regardless of the presence of any other power source. The auxiliary power source may be used in place of the main power source, or may be switched from the main power source on an as-needed basis. In a case where the secondary battery is used as the auxiliary power source, the kind of the main power source is not limited to the secondary battery.

Specifically, examples of the applications of the secondary battery include: electronic apparatuses including portable electronic apparatuses; portable life appliances; storage devices; electric power tools; battery packs mountable on laptop personal computers or other apparatuses as detachable power sources; medical electronic apparatuses; electric vehicles; and electric power storage systems. Examples of the electronic apparatuses include video cameras, digital still cameras, mobile phones, laptop personal computers, cordless phones, headphone stereos, portable radios, portable televisions, and portable information terminals. Examples of the portable life appliances include electric shavers. Examples of the storage devices include backup power sources and memory cards. Examples of the electric power tools include electric drills and electric saws. Examples of the medical electronic apparatuses include pacemakers and hearing aids. Examples of the electric vehicles include electric automobiles including hybrid automobiles. Examples of the electric power storage systems include home battery systems for accumulation of electric power for emergency. Needless to say, the secondary battery may have applications other than the series of applications exemplified here.

### [Examples]

Examples of the technology are described below.

### (Experiment Examples 1 to 12)

As described below, test secondary batteries (lithium-ion secondary batteries) were fabricated using the electrode structure 100 (including the active material particles 101, the covering film 102, the binder particles 103, and the electrically conductive particles 104) illustrated in FIGs. 1 and 2 as the positive electrode, and thereafter, the fabricated secondary batteries were evaluated for a battery characteristic.

### [Fabrication of Secondary Battery]

In a case of fabricating the positive electrode, first, 93 parts by mass of the positive electrode active material particles (lithium cobalt oxide (LiCoO₂)), 2 parts by mass of the positive electrode binder particles (polyvinylidene difluoride (PVDF)), and 5 parts by mass of the positive electrode conductive particles (acetylene black (AB)) were mixed together to obtain a positive electrode mixture. Thereafter, the positive electrode mixture was put into an organic solvent (N-methyl-2-pyrrolidone), following which the organic solvent was stirred to thereby prepare a paste positive electrode mixture slurry. Thereafter, the positive electrode mixture slurry was applied on one side of the base (a mold releasing film) by means of a coating apparatus, following which the applied positive electrode mixture slurry was dried to thereby form a coating layer (the precursor 100Z illustrated in FIG. 3). Thereafter, the covering film was formed by ALD to thereby fabricate the positive electrode. Lastly, the positive electrode was separated from the base.

In a case of forming the covering film by ALD, first, the coating layer was put into a chamber of an ALD apparatus, following which the inside of the chamber was heated (temperature inside the chamber = 145°C). Thereafter, a precursor material in a gaseous (vapor) state was supplied together with a nitrogen gas (N₂) into the chamber. In this case, a pressure inside the chamber was increased (upper limit pressure = 150 Pa), following which the increased pressure state was retained (retention time = 50 seconds). The kinds of the precursor material were as listed in Table 1. Here, tetrakis dimethylamido titanium (TDMATi), tetrakis dimethylamido tin (TDMASn), trimethylsilyldimethylamine (TMSDMA), and trimethylaluminum (TMA) were each used as the precursor material. Thereafter, the chamber was evacuated to thereby reduce the pressure inside the chamber (lower limit pressure = 30 Pa), following which the reduced pressure state was retained (retention time = 10 seconds). Thereafter, an oxygen gas (O₂) was introduced into the chamber and the state after the introduction of the oxygen gas was retained (retention time = 5 seconds), following which plasma was generated inside the chamber (plasma generation time = 1 second). Thereafter, the chamber was evacuated (evacuation time = 5 seconds) to thereby reduce the pressure inside the chamber (lower limit pressure = 30 Pa).

The materials for forming the covering film and the thicknesses (nm) of the covering film were as illustrated in Table 1. Here, titanium oxide (TiO₂), tin oxide (SnO₂), silicon oxide (SiO₂), and aluminum oxide (Al₂ O₃) were each used as the material for forming the covering film 102. The method of measuring the thickness of the covering film 102 was as described above. In the case of forming the covering film 102, the thickness of the covering film was adjusted on an as-needed basis by repeating the above-described procedure of forming the covering film a plurality of times.

In a case of preparing the electrolytic solution, the electrolyte salt (lithium hexafluorophosphate) was added to the solvent (ethylene carbonate and methyl ethyl carbonate), following which the solvent was stirred. In this case, a mixture ratio (a weight ratio) between ethylene carbonate and methyl ethyl carbonate in the solvent was set to 40:60, and the content of the electrolyte salt was set to 1 mol/kg with respect to the solvent.

In a case of assembling the secondary battery, the positive electrode and the negative electrode (a lithium foil having a thickness of 1000 µm) were opposed to each other with the separator (a fine porous polyethylene film having a thickness of 15 µm), which was impregnated with the electrolytic solution, interposed therebetween. The test secondary battery using the electrode structure 100 as the positive electrode was thereby completed.

### [Observation of Positive Electrode]

A positive electrode of Experiment example 2 was fabricated, following which the fabricated positive electrode was observed and analyzed.

Specifically, as a result of observing a section of the positive electrode by means of a TEM, the covering film was found to have been formed to cover the inner wall faces, located inside the voids, of the positive electrode active material particles and to cover the outer wall faces, located outside the voids, of the positive electrode active material particles, similarly to the case illustrated in FIG. 2.

Further, as a result of subjecting the positive electrode to elemental analysis by energy-dispersive X-ray analysis (EDX), titanium atoms were found to be present near each of the inner wall faces and outer wall faces of the positive electrode active material particles. Thus, the covering film covering each of the inner wall faces and outer wall faces included titanium oxide.

Furthermore, as a result of measuring the thickness of the covering film, the thickness of the covering film was found to have been controlled to fall within a range from 0.1 nm to 1.0 nm, both inclusive, as indicated in Table 1.

From these findings, it was confirmed that the use of ALD allowed for stable formation of the ultra-thin covering film at locations including, without limitation, the insides of the voids.

### [Evaluation of Battery Characteristic]

Evaluation of a charge and discharge rate characteristic, as a battery characteristic of the secondary battery, revealed the results described in Table 1.

In a case of examining the charge and discharge rate characteristic, first, the secondary battery was charged and discharged for one cycle in an ambient temperature environment (temperature = 23°C) in order to stabilize the state of the secondary battery. Upon the charging, the secondary battery was charged with a constant current of 0.1 C until a voltage reached 4.2 V, and was thereafter charged with a constant voltage of 4.2 V until a current reached 0.05 C. Upon the discharging, the secondary battery was discharged with a constant current of 0.1 C until the voltage reached 3.0 V. 0.1 C is a value of a current that causes a battery capacity (a theoretical capacity) to be completely discharged in 10 hours, and 0.05 C is a value of a current that causes the battery capacity to be completely discharged in 20 hours.

Thereafter, the secondary battery was charged and discharged for another cycle in the same environment to thereby measure the second-cycle discharge capacity. Conditions of the charging and the discharging were similar to those for the first cycle. Thereafter, the secondary battery was charged and discharged for another cycle in the same environment to thereby measure the third-cycle discharge capacity. Conditions of the charging and the discharging were similar to those for the first cycle, except that the current at the time of charging and the current at the time of discharging were each changed to 1 C. 1 C is a value of a current that causes the battery capacity to be completely discharged in 1 hour.

Lastly, the following was calculated: capacity retention rate (%) = (third-cycle discharge capacity/second-cycle discharge capacity) × 100.

[Table 1]

**Table 1**

| Positive electrode active material particle: LiCoO₂; Positive electrode binder particle: PVDF; Positive electrode conductive particle: AB | | | | | | |
|---|---|---|---|---|---|---|
| Experiment example | Precursor material | Covering film | | | Capacity retention rate (%) | |
| | | Formation material | Thickness (nm) | Formation method | | |
| 1 | TDMATi | TiO₂ | 0.1 | ALD | 92 | |
| 2 | | | 0.5 | | 85 | |
| 3 | | | 0.9 | | 79 | |
| 4 | | | 1.0 | | 76 | |
| 5 | TDMASn | SnO₂ | 0.5 | | 80 | |
| 6 | TMSDMA | SiO₂ | 0.5 | | 69 | |
| 7 | TMA | Al₂O₃ | 0.5 | | 60 | |
| 8 | - | - | - | - | 51 | |
| 9 | TDMATi | TiO₂ | 2.0 | ALD | 71 | |
| 10 | TDMASn | SnO₂ | 2.0 | | 67 | |
| 11 | TMSDMA | SiO₂ | 2.0 | | 62 | |
| 12 | TMA | Al₂O₃ | 2.0 | | 54 | |

### [Discussion]

As described in Table 1, the capacity retention rate varied depending on the composition of the covering film.

Specifically, in a case where the thickness of the covering film was greater than 1 nm (Experiment examples 9 to 12), the capacity retention rate increased as compared with a case where no covering film was formed (Experiment example 8). However, the capacity retention rate in the case where the thickness of the covering film was greater than 1 nm was not sufficiently high.

In contrast, in a case where the thickness of the covering film was 1 nm or less (Experiment examples 1 to 7), the capacity retention rate further increased as compared with the case where the thickness of the covering film was greater than 1 nm (Experiment examples 9 to 12). Moreover, the capacity retention rate in the case where the thickness of the covering film was 1 nm or less was sufficiently high.

These results indicate that in the case where the thickness of the covering film was 1 nm or less, ion diffusibility for lithium ions improved in spite of the fact that the surfaces of the positive electrode active material particles were covered with the covering film having an insulating property.

In particular, the following tendencies were obtained in the case where the thickness of the covering film was 1 nm or less. Firstly, the capacity retention rate further increased if the thickness of the covering film was 0.9 nm or less. In this case, a high capacity retention rate was obtained stably if the thickness of the covering film was in a range from 0.1 nm to 0.9 nm both inclusive. Secondly, in a case where titanium oxide, tin oxide, or silicon oxide was used as the material for forming the covering film, the capacity retention rate further increased as compared with a case where aluminum oxide was used as the material for forming the covering film. In particular, the capacity retention rate yet further increased if titanium oxide or tin oxide was used as the material for forming the covering film.

### [Conclusion]

The results described in Table 1 indicate that the electrode structure in which the active material particles were connected to each other to thereby form a porous structure having voids improved the charge and discharge rate characteristic if the inner wall faces, located inside the voids, of the active material particles were covered with the insulating covering film having a thickness of 1 nm or less. The electrode structure thus achieved an improved electrical characteristic, and accordingly, the secondary battery using the electrode structure achieved a superior battery characteristic.

Although the technology has been described above with reference to some embodiments and Examples, the embodiment of the technology is not limited to those described with reference to the embodiments and the Examples above, and is therefore modifiable in a variety of ways.

Specifically, although the description has been given with reference to the case where the electrode structure of the technology is used as an electrode, applications of the electrode structure of the technology are not particularly limited. The electrode structure of the technology may thus be used as a component other than electrodes. Further, although the description has been given with reference to the case where the electrode structure of the technology is used in a secondary battery, the applications of the electrode structure of the technology are not particularly limited. The electrode structure of the technology may thus be used in any other device such as a capacitor.

Further, although the description has been given with reference to the case where the secondary battery of the technology is of the laminated-film type, the secondary battery of the technology is not limited to a particular type. Specifically, the secondary battery of the technology may be of any other type, for example, a cylindrical type, a prismatic type, or a coin type. Further, although the description has been given with reference to the case where the battery device for use in the secondary battery of the technology has a wound structure, the structure of the battery device is not particularly limited. Specifically, the battery device may have any other structure such as a stacked structure.

The effects described herein are mere examples. Therefore, the effects of the technology are not limited to the effects described herein. Accordingly, the technology may achieve any other effect.

## Claims

1. An electrode structure comprising:
active material particles that are connected to each other and form a porous structure having voids; and
a covering film having an insulating property, the covering film having a thickness of less than or equal to 1 nanometer and covering at least some of inner wall faces of the active material particles, the inner wall faces being located inside the voids.

2. The electrode structure according to claim 1, wherein the thickness of the covering film is greater than or equal to 0.1 nanometers.

3. The electrode structure according to claim 1 or 2, wherein the covering film includes a metal oxide.

4. The electrode structure according to claim 3, wherein the metal oxide includes at least one of titanium oxide, tin oxide, silicon oxide, or aluminum oxide.

5. The electrode structure according to any one of claims 1 to 4, wherein the covering film further covers at least some of outer wall faces of the active material particles, the outer wall faces being located outside the voids.

6. The electrode structure according to any one of claims 1 to 5, further comprising binder particles that bind the active material particles to each other,
wherein the covering film further covers at least some of respective surfaces of the binder particles.

7. The electrode structure according to any one of claims 1 to 6, further comprising electrically conductive particles that enhance electrical conductivity,
wherein the covering film further covers at least some of the respective surfaces of the electrically conductive particles.

8. A secondary battery comprising:
an electrode including the electrode structure according to any one of claims 1 to 7; and
an electrolytic solution.

9. The secondary battery according to claim 8, wherein the electrode comprises a positive electrode.
